# EUROPEAN PATENT APPLICATION

(11) **EP 0 526 431 A1**
(43) Date of publication of application: **03.02.1993**
(21) Application number: 92830416.1
(22) Date of filing: 27.07.1992
(51) Int. Cl.: B23Q 3/10

(54) **Rest for the modular fixing of clamping fixtures on machine tools**

(30) Priority: 30.07.1991 IT BA910087
(71) Applicant: CUTER S.p.A., I-25037 Pontoglio (Brescia) (IT)
(72) Inventor: Cuter, Pietro, I-25037 Pontoglio (Brescia) (IT)
(74) Representative: Manzoni, Alessandro

(57) **Abstract**

This invention refers to a rest for the modular fixing of clamping fixtures on machine tools, characterized in that the surface of each front face (12), the internal surface of a smooth section (13a) and a threaded section (13b) of each securing hole is fully protected with an even high resistant topcoat (14).

## Description

This invention refers to a rest for the modular fixing of clamping fixtures on machine tools, and in particular to supports with one or more faces and a grid of partly threaded calibrated holes placed at the same centre-to-centre distance, onto which the means normally used to clamp the workpiece during mechanical working are screwed down.
These rests can be in the shape of prismatic or plate cubes and are designed to hold the workpiece by clamping means or fixtures which are fitted from time to time to the desired position using the grid of holes provided. These rests are generally made of cast iron, steel or aluminium and are fitted with a tempered bushing with an inserted thread to make all points on the workpiece securing or clamping fixtures resistant to wear and abrasion. Said tempered bushings and inserted threads are fitted with adhesive, which apart from requiring a lot of time and money, they do not always give reliable alignment and squareness of the holes with respect to the workpiece resting face or clamping fixtures. Moreover, protection of the resting front flat surfaces is practically lacking as they are rarely coated or treated so they are easily subjected to the effects of abrasion, rust, etc. that can negatively affect the surface flatness.

This invention aims to provide a remedy to the above-mentioned inconveniences and eliminate all the bushings and inserted threads by providing rests characterized by simple construction and design.

The aim of this invention is to provide rests of the type and for the application mentioned above in which the front flat surfaces, and the surfaces of the holes and threads in the grid are treated and fully protected with a high resistant coat, e.i. chemical nickel-plating by means of the so-called Niploy process.

The advantages involved are numerous and evident:
- no need for bushings and inserted threads, which means less execution times and reduced costs;
- high resistant topcoat which gives improved protection of the hole and thread surfaces against wear and abrasion resulting from friction with other bodies;
- protection of all surfaces against rust and chemical and atmospheric agents, which are normally present in the work environment and that might alter surface flatness;
- a reduced friction coefficient of the treated surfaces, which makes them substantially self-lubricating and ensures wear-free resting and sliding, without affecting surface flatness;
- excellent surface evenness owing to calibrated application of the topcoat with very low tolerances, which gives better accuracy in workpiece clamping and working;
- no effect on correct squareness of the holes with respect to the front flat surfaces;
- long-lasting top performance and reliable conditions of the rest assembly.

A practical application of this invention is shown in the attached drawings, and more precisely:
Figure 1 is a prismatic rest in accordance with the invention, in which some holes are plugged by screw caps; and
Figure 2 is a partial view of the rest in the area of a securing hole.

The rest covered by this invention is comprised of a body or plate (11) with at least one front face (12) having a grid of securing holes (13) all at the same centre-to-centre distance, each hole featuring a cylindrical flat section (13a) and a deep threaded section (13b). At least the visible surface of the front face (12) and the surfaces of said flat section (13a) and the threaded section (13b) of each hole (13) are chemically processed to give protection and increase hardness. The process consist of the application of a nickel alloy onto all the surfaces involved, i.e. the formation of a nickel-plating topcoat (14) by means of the so-called Niploy process.

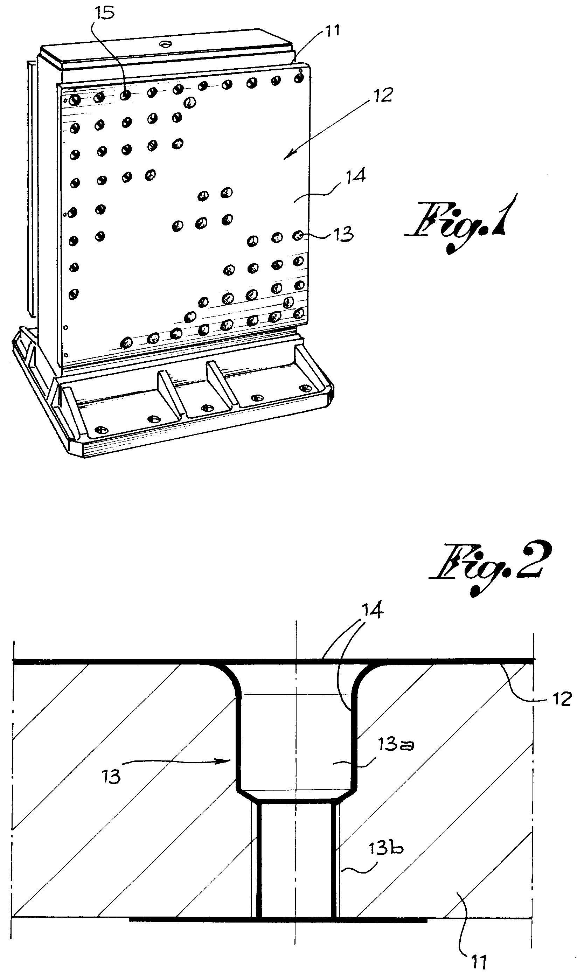

Figure 2 of the drawing shows a detailed view of a hole of the rest, where the topcoat (14) is represented by a large line onto the front, hole and thread surfaces. The coating gives the surfaces excellent hardness and features that improve performance as referred hereabove. The holes that are not used can be from time to time plugged using fluid-tight screw caps (15).

## Claims

**1)** Rest for the modular fixing of clamping fixtures on machine tools, which is made up of a prismatic or plate-shaped body with a grid of calibrated securing holes placed at the same centre-to-centre distance on one or more front faces, each hole having a cylindrical flat surface and a deep threaded section, characterized in that the surface of each front face (12), the internal smooth surface (13a) and the thread (13b) of each securing hole are fully protected with an even high resistant topcoat (14).

**2)** A rest in accordance with claim 1), characterized in that said protective topcoat (14) consists of nickel plating using a nickel alloy.

**3)** A rest in accordance with claim 2), characterized in that said surface nickel plating is applied by a chemical process.
